Europäisches Patentamt

European Patent Office

Office européen des brevets

(11) Publication number: **0 310 286**
**A1**

## EUROPEAN PATENT APPLICATION

(21) Application number: **88308728.0**

(22) Date of filing: **20.09.88**

(51) Int. Cl.⁴: **F16L 3/22**

(30) Priority: **26.09.87 GB 8722688**
**31.05.88 GB 8812852**

(43) Date of publication of application:
**05.04.89 Bulletin 89/14**

(84) Designated Contracting States:
**BE DE FR NL**

(71) Applicant: **Lyon, Robert Cyril**
**"Regina" Ludovic Terrace**
**Greenhill Wigan Lancashire WN1 2QZ(GB)**

(72) Inventor: **Lyon, Robert Cyril**
**"Regina" Ludovic Terrace**
**Greenhill Wigan Lancashire WN1 2QZ(GB)**

(74) Representative: **Quest, Barry et al**
**M'CAW & CO. 41-51 Royal Exchange Cross**
**Street**
**Manchester M2 7BD(GB)**

(54) **Cable cleat.**

(57) A cable cleat (10) has a retaining part (12) of inverted V-shaped structure, and a base part (11) with a support surface (20) beneath the apex of the retaining structure (12). The base part (11) and retaining part (12) can be tightened towards each other with screws (17) so that cables (13) can be clamped between the inverted V-shaped structure (12) and the support surface (20) of the base part (11). The base part (11) may be formed from a resilient structure which deflects as the parts (11,12) are tightened against the cables (13).

FIG.1

## CABLE CLEAT

This invention relates to cable cleats, and in particular to cleats for use in supporting and locating three cables in triangular or trefoil formation.

Electrical cables are generally supported and located by cable clamps or cleats. In many circumstances, for example in 3-phase power distribution, three cables are run in side-by-side triangular or trefoil formation and cable cleats have been designed specifically for such purpose. One such cleat comprises a base member which may be secured to a cable ladder, wall or other support structure, and two side members each having one end thereof pivotally attached to the base member. A bolt secures the other ends of the side members together after the three cables have been introduced into the triangular space enclosed by the three members. Each member has two concave recesses in its inner surface to embrace two of the cables. Aluminium is used for the members so as to avoid corrosion and hysteresis heating effects, and the members are moulded to the required shape. However, aluminium does not adequately resist the tendency for the cables to blow apart under the out-of balance magnetic forces which occur for example if there is a short circuit between one phase and another or between one phase and earth. In addition, in order to accommodate a wide range of diameters of cable a large number of sizes of cleat of this type are required, for example 33 differently sized cleats in order to cover a range of cable diameters from 25mm to 75mm. In consequence the tooling required to produce such a large number of differently sized cleats is very costly.

To overcome the above disadvantages an alternative design of cleat has been used. In this case the three members are flat strips of stainless steel, the side members being flanged at their ends so as to be attachable to the base member and to each other after enclosing the cables. Conveniently the side members are attached to the base member by means of the bolts or studs by which the cleat is attached to the cable ladder or other supporting structure. To protect the cables, rubber or plastics material cushions are provided on the inner surfaces of the three members. Such a cleat accommodates a larger range of cable diameters than one size of the previously described type of cleat, and expensive moulds are not required. In addition, the use of stainless steel reduces the tendency for the cables to blow apart under fault conditions. However such a design of cleat is relatively wide so that the location of several cleats in side-by-side disposition on a cable ladder is restricted.

A further type of cleat comprises a moulded base and a flexible stainless steel strap which passes around the base and the cables. Such a cleat can accommodate a large range of cable diameters, but since the strap is necessarily thin so as to be flexible, there is a risk of chaffing of the cables by the relatively sharp edges of the strap, and the strap itself is prone to damage.

It is an object of the present invention to provide a cleat which avoids, at least to a substantial extent, the abovementioned disadvantages.

According to one aspect of the invention there is provided a cable cleat comprising a base part mountable on a support and a cable retaining part, said cable retaining part having two arms which converge towards each other and form an apex therebetween and adjustment means whereby the distance of said base part from said apex may be adjusted in a direction substantially along a centre line of said cleat between said arms, said base part providing a cable support surface extending transversely at said centre line, characterised in that the adjustment means acts between the base part and the arms to tighten said arms against cable on said cable support surface independently of the mounting of the base part on the support

The adjustment means may comprise bolts on said base part which engage holes in free end portions of said arms and said cable support surface is upstanding on said base part between said arms.

According to a second aspect of the present invention there is provided a cable cleat comprising a base part mountable on a support and a cable retaining part , said cable retaining part having two arms which converge towards each other and form an apex therebetween and adjustment means whereby the distance of said base part from said apex may be adjusted in a direction substantially along a centre line of said cleat between said arms, said base part providing a cable support surface extending transversely at said centre line, characterised in that said adjustment means comprises bolts on said base part which engage holes in free end portions of said arms, and said cable support surface is upstanding on said base part between said arms.

Said bolts may also provide attachment means whereby said cable cleat may be attached to a cable ladder or other support.

Preferably said base part has a mounting portion for attachment to a support means, an upstanding portion arranged to extend upwardly from said mounting portion towards said cable retaining part, and a transverse portion extending transversely from said upstanding portion spaced from said mounting portion, said cable support surface being provided on said transverse portion.

Said transverse portion is preferably resiliently deflectable towards said mounting portion, and, in this case preferably also said base part further comprises an extension portion which extends from said transverse portion towards said mounting portion and has a free end spaced from said mounting portion.

Accoridng to a third aspect of the present invention there is provided a cable cleat comprising a base part mountable on a support and a cable retaining part, said cable retaining part having two arms which converge towards each other and form an apex therebetween and adjustment means whereby the distance of said base part from said apex may be adjusted in a direction substantially along a centre line of said cleat between said arms, said base part providing a cable support surface extending transversely at said centre line, characterised by the provision of a resilient structure which is arranged to deflect as the arms are tightened against cables on said cable support surface.

The arms may converge at an included angle of substantially 60°. Said arms and said support surface may have a deformable material such as rubber or plastics material provided thereon, or said cleat may be coated with a rubber or plastics material. The cleat may be of stainless steel.

The arms of the retaining part may be formed by a one-piece inverted V-shaped strip structure. The base part is preferably formed from at least one bent strip-shaped piece shaped to define two said mounting portions, two said upstanding portions, and two said transverse portions.

Embodiments of cable cleat in accordance with the invention will now be described with reference to the accompanying drawings in which:-

Fig. 1 is a front elevation of one embodiment in use with cables of relatively small diameter,

Fig. 2 is a sectional plan on line 11-11of Fig. 1,

Fig. 3 is a side elevation of the embodiment of Fig. 1 in use with cables of relatively large diameter,

Fig. 4 is a front elevation of the cleat in the configuration of Fig. 3 with other like cleats in stacked formation therewith,

Figs. 5 to 9 are front elevations and plans of other embodiments, and

Fig. 10 shows a modification of the base part of Fig. 8.

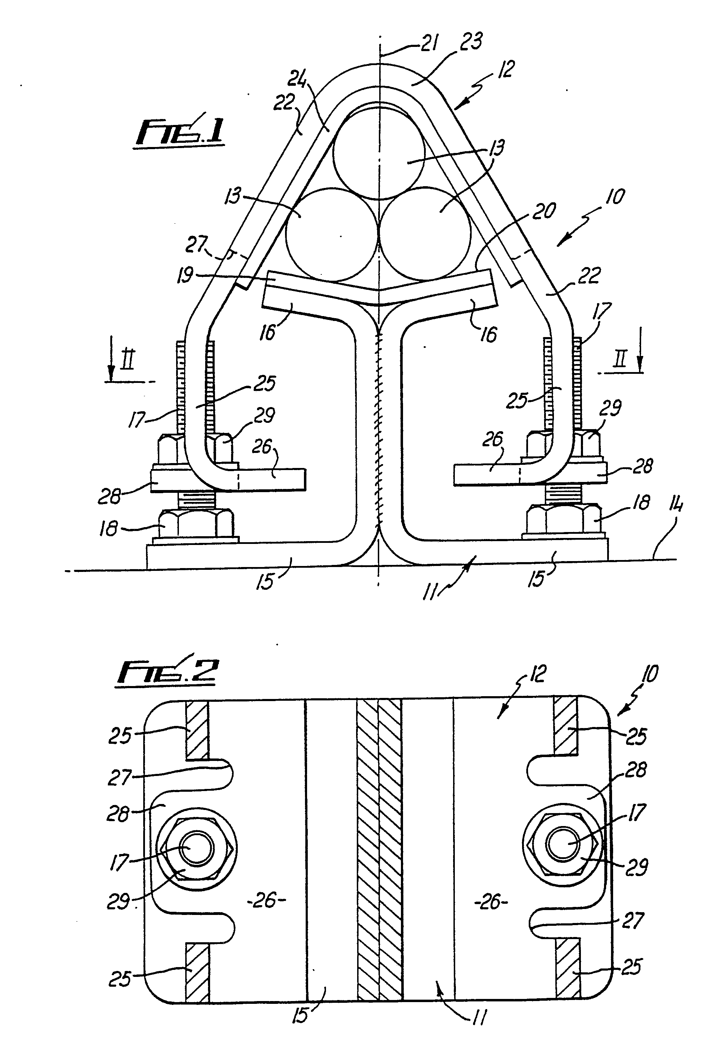

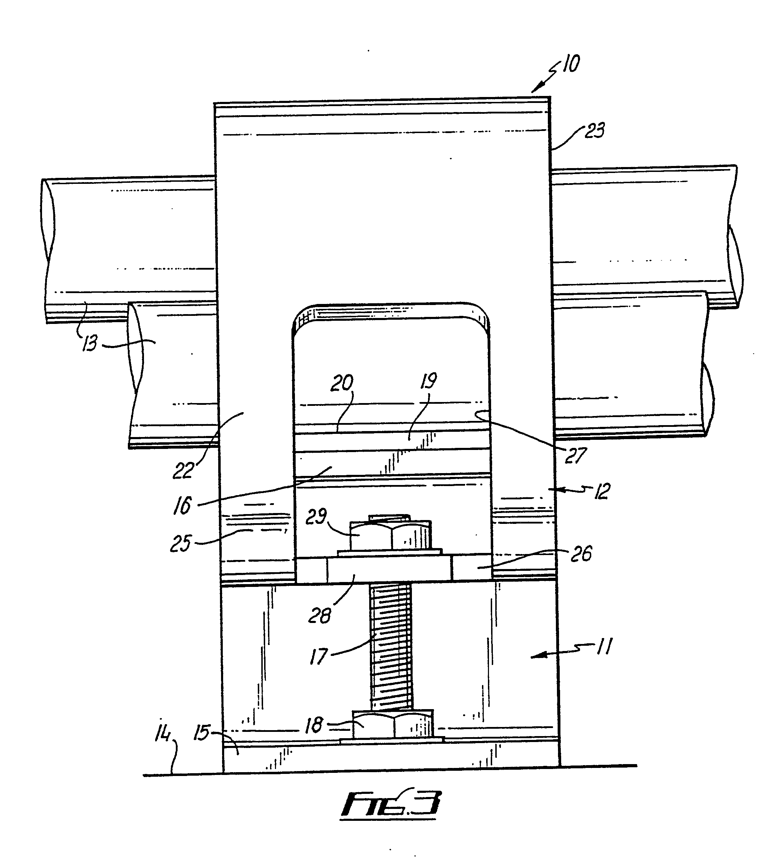

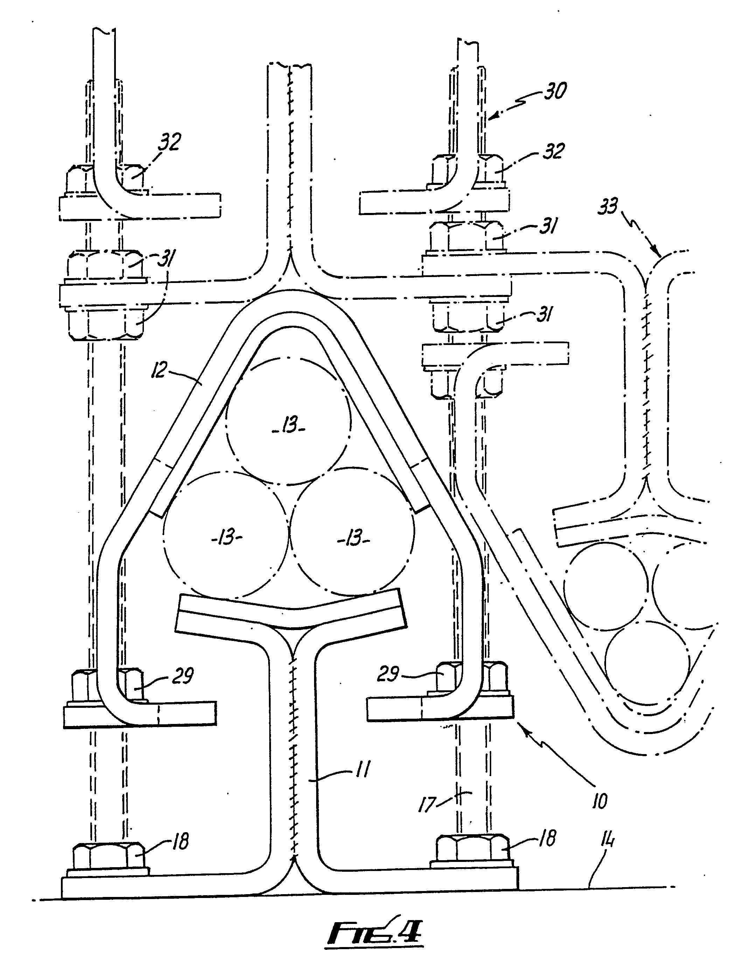

Referring now to Figs. 1 to 3 there is shown a cable cleat 10 comprising a base part 11 and a cable retaining part 12. The cleat 10 supports and locates three cables 13 in triangular or trefoil formation, and for this purpose the cleat 10 is adapted to be secured to a cable ladder or other support structure 14. The base part 11 is formed of two C-shaped stainless steel members welded together in back to back formation providing two attachment flanges 15 and two shorter cable support flanges 16. A stud or bolt 17 passes through the support 14 and an aperture in each attachment flange 15, and a nut 18 on each bolt or stud 17 secures the base part 11 to the support 14. A cushion 19 of a deformable material such as rubber or plastics material is attached to the two cable support flanges 16 so as to provide a cable support surface 20 which extends transversely of the centre-line 21 of the cleat 10.

The cable retaining part 12 comprises two arms 22 which converge towards each other and form an apex 23 therebetween. The included angle between the arms 22 is 60° so as to properly embrace the trefoil formation of the cables 13 irrespective of the diameter of those cables 13. A cushion 24 of rubber or plastics material is attached to the inner surfaces of the arms 22, which together with oushion 19 reduce the risk of damage to the cables 13. Each arm 22 is bent at a point remote from the apex 23 to provide an arm section 25 which extends substantially parallel with the centre-line 21, and then the free end 26 is bent inwardly towards the centre-line 21. A slot 27 is cut or punched in each arm 22, arm section 25 and free end 26, and a flange part 28 of the arm section 25 extends outwardly of the cleat 10 from the free end 26. An aperture is provided in each flange part 28 through which a bolt or stud 17 can pass so that the cable retaining part 12 and the base part 11 are retained on the same bolts or studs 17. By bending the free ends 26 inwardly and forming the flange parts 28 from the arm sections 25 the overall width of the cleat 10 is kept to a minimum, i.e. it is less than would be the case if the flange parts 28 were formed by simply bending the free ends 26 outwardly. Further nuts 29 retain the cable retaining part 12 on the bolts or studs 17 and also provide the means whereby the distance between the apex 23 and the cable support surface 20 can be varied in a direction along the centre line 21 of the cleat 10. By this means cables of widely differing diameters can be securely retained in the cleat 10. In consequence, only a small number of differently sized cleats 10 are required in order to accommodate a large range of cable diameters. In addition since the overall width of the cleat 10 has been kept to a minimum the width of the cable ladder or other support required can be minimised or a greater number of cleats 10 can be secured in side-by-side disposition on any given cable ladder or support than would otherwise be the case, i.e. fewer or smaller cable ladders or supports are required for a given cable installation. The minimising of the cleat width also reduces the pressure on the cable from tightening and from forces induced by electrical current under fault conditions.

The cushions 19, 24 may be glued or clipped to the parts of the cleat 10, which parts may be of steel or preferably stainless steel for corrosion prevention and minimal heat build up due to hysteresis currents. Alternatively the parts 11,12 may be coated in a rubber or plastics material, such as P.V.C. of between .05 and .06cm in thickness. Steel has the ductility and strength to resist the explosive forces which are generated under fault conditions in a trefoil formation, for example fault levels of 71KA are considered normal on off-shore oil production platforms.

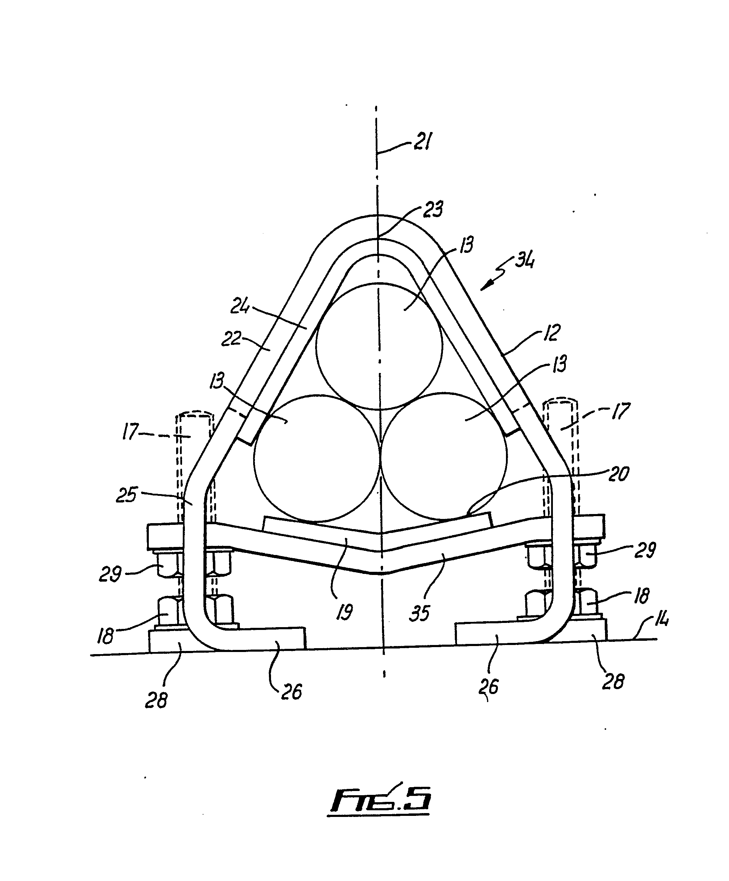

The cleat 10 shown in Figs. 1 to 3 and described above readily lends itself to the formation of a stack of cleats for supporting and locating several sets of cables in trefoil configuration. Such an arrangement is shown in Fig. 4, in which longer studs or bolts 17 are used than those shown in Figs. 1 to 3. A second cleat 30, shown in chain lines,is secured by further nuts 31 and 32 to the bolts or studs 17 and is located on top of the first cleat 10. Additionally, a third cleat 33, also shown in chain lines, is mounted in inverted disposition on one of the bolts or studs 17 and a further bolt or stud (not shown) so as to lie side-by-side with the first cleat 10. By having a sufficient number of sufficiently long bolts or studs 17, any required number of cleats 10,30,33 can be assembled in this way in a very compact formation, thereby reducing the overall size of any given multi-cable installation.

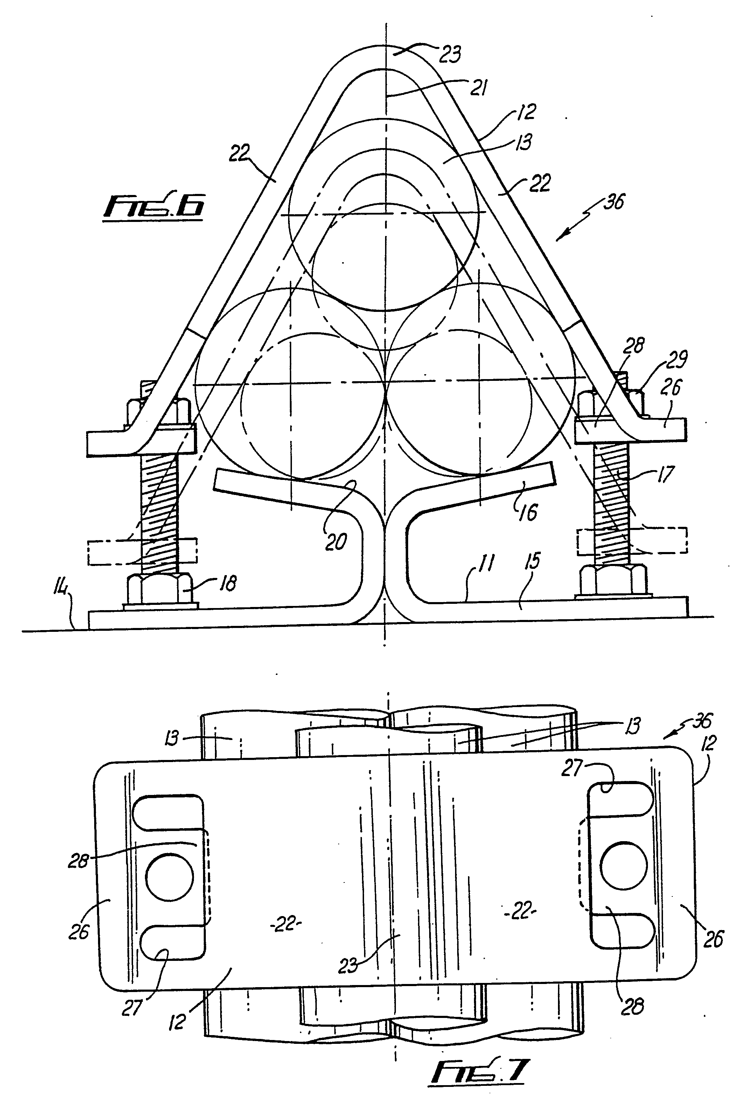

Referring now to Fig. 5 there is shown an alternative embodiment of cleat 34. In this embodiment the cable retaining part 12 is identical with cable retaining part 12 previously described and is secured to the support 14 in contact therewith by nuts 18 on bolts or studs 17. The base part 35 comprises a slightly dished plate to which cushion 18 is attached and which is located on studs or bolts 17. The additional nuts 29 are located at the side of the base part 35 remote from the cables 13 and serve to adjust the distance of the cable support surface 20 from the apex 23 in the direction along the centre line 21.

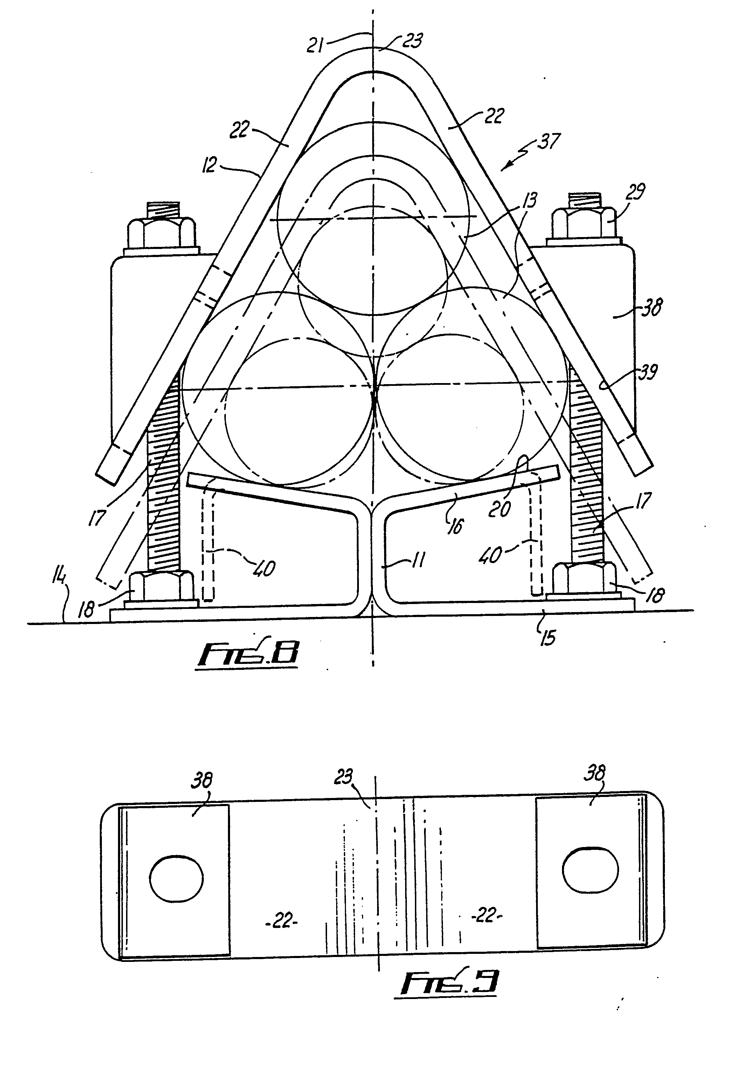

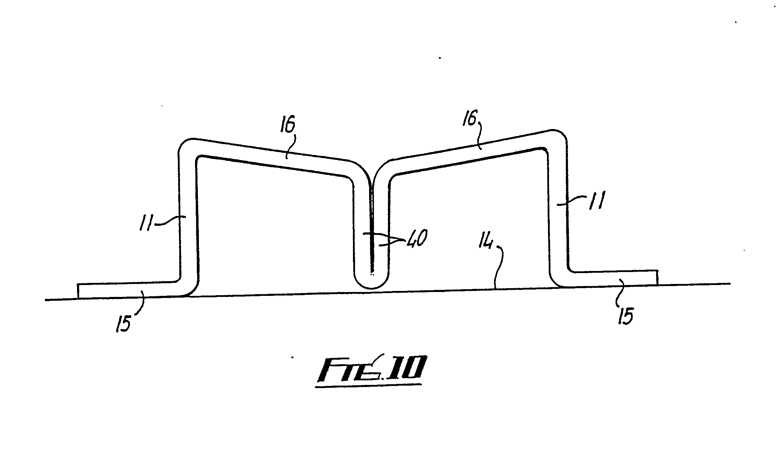

Referring now to Figs. 6 and 7 there is shown an alternative embodiment of cleat 36 which is generally similar to cleat 10 of Figs. 1 to 4 and like parts are identified by corresponding reference numerals. In this case however the free ends 26 of the arms 22 are bent outwardly. A slot 27 is provided in each arm 22 and free end 26, and flange part 28 of the arm 22 extends inwardly of the cleat 36 from the free end 26. This embodiment is particularly suited to a situation in which it is difficult to thread the cleat 36 around the in-situ cables 13 since the spacing between the flanges 28 is greater than the width of the cable support surface 20, in contrast with the cleat 10 previusly described.

Referring now to Figs. 8 and 9 there is shown another embodiment of cleat 37. In this case the base part 11 is made of thinner material than the base parts 11 of the previously described embodiments in order to provide resilience in the support of the cables 13. This is particularly useful if the cables 13 are prone to damage by the cleat 37 so as to reduce the risk of such damage. This embodiment differs also from the previously described embodiments in that the arms 22 are not bent inwardly or outwardly in the region of their free ends. Instead a tapered bush 38 is located on each bolt or stud 17, each bush 38 having a face 39 attached to the arm (e.g. by welding) or lying attachably in contact therewith, said face 39 being at an angle of 60° to the end face of the bush 38, and a nut 29 being screwed against the bush. The bushes 38 may be of any suitable material such as metal or thermosetting resin. This embodiment also is suited to location of the cleat 38 around an in-situ trefoil cable arrangement 13.

In a modification of the embodiment of Figs. 8 and 9, as shown in broken lines on Fig. 8, the flanges 16 of the base part 11 are extended and turned downwardly to form depending portions 40 which have free ends which terminate close to the attachment flanges 15. In use, as the nuts 29 are tightened, the portions 40 are moved towards the flanges 15 and the required tensioning is attained when the portions 40 contact or are very close to the flanges 15. This facilitates installation.

This visual indication of correct tensioning is analogous to that which can be achieved by observation of the positioning of the flanges 26 in the embodiments of Figures 1 to 6. Also, the above described modification of the Figure 8 embodiment may have a reversed configuration of the base part, i.e. such that the portions 40 meet on the centre line and the upstanding portions 11 between the flanges 15,16 are in the positions occupied by portions 40 shown in Figure 8. With this reversed configuration, as shown in Fig. 10, the portions 40 may be linked at their bottom ends to form a central U-shaped structure which can open out slightly to enable the base part to accommodate slight variations in the spacing of the bolt holes in the support structure 14.

Although all of the cleats described herein have been considered in relation to the supporting and locating of cables, such cleats could of course be used for supporting and locating other articles of a similar cylindrical nature such as pipes, or a combination of cables and pipes.

**Claims**

1. A cable cleat comprising a base part (11) mountable on a support (14) and a cable retaining part (12), said cable retaining part (12) having two arms (22) which converge towards each other and form an apex therebetween and adjustment means whereby the distance of said base part from said apex may be adjusted in a direction substantially along a centre line of said cleat between said arms, said base part providing a cable support surface (20) extending transversely at said centre line, characterised in that the adjustment means (17, 29) acts between the base part (11) and the arms (22) to tighten said arms against cables on said cable support surface (20) independently of the mounting of the base part (11) on the support (14).

2. A cable cleat comprising a base part (11) mountable on a support (14) and a cable retaining part (12), said cable retaining part (12) having two arms (22) which converge towards each other and form an apex therebetween and adjustment means whereby the distance of said base part from said apex may be adjusted in a direction substantially along a centre line of said cleat between said arms, said base part providing a cable support surface (20) extending transversely at said centre line, characterised by the provision of a resilient structure (19, 24, 16) which is arranged to deflect as the arms (22) are tightened against cables on said cable support surface (20).

3. A cable cleat comprising a base part (11) mountable on a support (14) and a cable retaining part (12), said cable retaining part (12) having two arms (22) which converge towards each other and form an apex therebetween and adjustment means whereby the distance of said base part from said apex may be adjusted in a direction substantially along a centre line of said cleat between said arms, said base part providing a cable support surface (20) extending transversely at said centre line, characterised in that said adjustment means comprises bolts (17) on said base part (11) which engage holes in free end portions (26) of said arms (22), and said cable support surface (20) is upstanding on said base part (11) between said arms (22).

4. A cable cleat as claimed in claim 1, characterised in that said adjustment means comprises bolts (17) on said base part (11) which engage holes in free end portions (26) of said arms (22) and said cable support surface (20) is upstanding on said base part (11) between said arms (22).

5. A cable cleat according to claim 3 or 4, characterised in that said base part (11) has a mounting portion (15) for attachment to a support (14), an upstanding portion arranged to extend upwardly from said mounting portion towards said cable retaining part (12), and a transverse portion (16) extending transversely from said upstanding portion spaced from said mounting portion (15), said cable support surface (20) being provided on said transverse portion (16), and said transverse portion (16) being arranged to resiliently deflect towards said mounting portion (15) as the arms (22) are tightened against cables on said cable support surface (20).

6. A cable cleat according to claim 5, characterised in that said base part (11) further comprises an extension portion (40) which extends from said transverse portion (16) towards said mounting portion (15) and has a free end spaced from said mounting portion.

7. A cable cleat according to any one of claims 1 to 6, characterised in that said arms (22) are formed by a one-piece inverted V-shaped strip structure.

8. A cable cleat according to claim 3 or 4, or any claim dependent thereon, characterised in that said free end portions are inturned to define flanges containing the said holes.

9. A cable cleat according to claim 3 or 4, or any claim dependent thereon, characterised in that said free end portions (26) have bushes (38) thereon containing the said holes.

10. A cable cleat according to claim 5 or any claim dependent thereon, characterised in that said base part (11) is formed from at least one bent strip-shaped piece shaped to define two said mounting portions (15), two said upstanding portions, and two said transverse portions (16).

FIG.1

FIG.2

FIG.3

*Fig.4*

FIG.5

_FIG.6_

23
21
12
13
22
22
36
28
29
26
17
16
20
11
15
14
18

_FIG.7_

13
13
36
12
27
28
26
26
-22-
-22-
23
27
28
12

FIG.8

FIG.9

FIG.10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 618 067 (DEWITZ) * Figure 3 * | 1,3,4,7,8,9 | F 16 L 3/22 |
| A | | 5 | |
| A | FR-A-1 341 140 (FISCHER) * Figures * | 1,2 | |
| A | FR-A- 736 735 (THIRION) * Figure 6 * | 1,2 | |

TECHNICAL FIELDS SEARCHED (Int. Cl.4)

F 16 L

The present search report has been drawn up for all claims

| Place of search | Date of completion of the search | Examiner |
|---|---|---|
| THE HAGUE | 06-12-1988 | HUBEAU M.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.............................................................................
& : member of the same patent family, corresponding document

EPO FORM 1503 03.82 (P0401)